Europäisches Patentamt

European Patent Office

Office européen des brevets

(11) Veröffentlichungsnummer: **0 236 800 B1**

(12) **EUROPÄISCHE PATENTSCHRIFT**

(19)

(45) Veröffentlichungstag der Patentschrift: **03.06.92**

(21) Anmeldenummer: **87102232.3**

(22) Anmeldetag: **17.02.87**

(51) Int. Cl.⁵: **G02B 6/44**

(54) **Nachrichtenkabel mit Lichtwellenleitern.**

(30) Priorität: **11.03.86 DE 3607970**
        **22.12.86 DE 3643886**

(43) Veröffentlichungstag der Anmeldung:
   **16.09.87 Patentblatt 87/38**

(45) Bekanntmachung des Hinweises auf die
   Patenterteilung:
   **03.06.92 Patentblatt 92/23**

(84) Benannte Vertragsstaaten:
   **AT BE ES FR GB GR IT NL SE**

(56) Entgegenhaltungen:
   **EP-A- 0 107 468      EP-A- 0 170 185**
   **DE-A- 2 424 041      DE-A- 2 635 917**
   **DE-A- 3 309 996      FR-A- 2 342 508**
   **FR-A- 2 404 236      FR-A- 2 424 612**
   **GB-A- 2 118 735      US-A- 4 096 010**

(73) Patentinhaber: **kabelmetal electro GmbH**
   **Kabelkamp 20 Postfach 260**
   **W-3000 Hannover 1(DE)**

(72) Erfinder: **Rohner, Peter, Dr.**
   **Eschenkamp 12**
   **W-3004 Isernhagen 4(DE)**
   Erfinder: **Ziemek, Gerhard, Dr.**
   **Bunzlauerstrasse 6**
   **W-3012 Langenhagen(DE)**

(74) Vertreter: **Döring, Roger, Dipl.-Ing. et al**
   **Kabelkamp 20**
   **W-3000 Hannover 1(DE)**

## Beschreibung

Die Erfindung bezieht sich auf ein Nachrichtenkabel mit Glasfasern aufweisenden Lichtwellenleitern und zugfestem Mantel, in dessen von dem Mantel umgebenen immenbereich mindestens eine Bandleitung angeordnet ist, in der die Lichtwellenleiter parallel zueinander verlaufend zwischen zwei bandförmigen Trägern festgelegt sind (DE-A 28 15 514). Einschlägiger stand der Technik ist auch in den Schriften DE-A-2 424 041 und der FR-A-2 342 508 offenbart.

Lichtwellenleiter - im folgenden kurz als "LWL" bezeichnet - sind fertige Gebilde aus Glasfasern, die ohne zusätzliche Bearbeitung zur Übertragung von Lichtwellen geeignet sind. Solche LWL dienen in der Nachrichtentechnik als Ersatz der bisher üblichen metallischen Leiter. Gegenüber den metallischen Leitern haben sie eine Reihe von Vorteilen. Die LWL sind sehr breitbandig und dämpfungsarm, so daß über einen Leiter mehr Kanäle bei vergrößertem Verstärkerabstand übertragen werden können. Sie sind gut biegbar und haben kleine Durchmesser, so daß der Kabelquerschnitt verringert werden kann. Ferner treten keine Beeinflussungen durch äußere elektrische und magnetische störfelder auf.

Zum Einsatz der LWL für Übertragungszwecke der Nachrichtentechnik müssen dieselben in LWL-Kabeln verarbeitet werden. Hierbei muß sichergestellt sein, daß weder während der Herstellung noch beim Transport oder bei der Verlegung der LWL-Kabel eine Beschädigung der LWL eintritt. Da dieselben spröde sind und nur eine geringe Dehnbarkeit haben, muß bei der Herstellung sehr sorgfältig vorgegangen werden. Die LWL müssen aber auch im LWL-Kabel so geschützt angeordnet werden, daß ihre Funktionsfähigkeit auf Dauer sichergestellt ist.

Bei dem bekannten LWL-Kabel nach der eingangs erwähnten DE-OS 28 15 514 sind die LWL in einer Vorfertigung in Bandleitungen zusammengefaßt. Die bandförmigen Träger stellen einen Schutz der LWL bei deren Weiterverarbeitung dar. Mindestens eine solche Bandleitung ist bei diesem LWL Kabel in einen Mantel eingebettet, der als Profilkörper mit Armierungsdrähten ausgeführt ist. Die Bandleitung mit den LWL ist in einer in Längsrichtung verlaufenden Bohrung des profilkörpers lose angeordnet. Die hier verwendeten Bandleitungen haben nur eine geringe Anzahl von LWL. Da in jeder Bohrung des profilkörpers nur eine Bandleitung angeordnet werden soll, ist die in diesem bekannten LWL-Kabel anzubringende Anzahl von LWL daher sehr beschränkt, wenn die Abmessungen des Profilkörpers und damit die Abmessungen des LWL-Kabels in üblichen Grenzen bleiben sollen. Die Herstellung dieses bekannten LWL-Kabels ist außerdem sehr aufwendig, da die Bandleitung mit den LWL in die Bohrung des Profilkörpers eingezogen werden muß. Das geht nur für relativ kurze Kabellängen. Außerdem sind der Druckschrift keine Hinweise über die Ausführung der bandförmigen Träger für die Bandleitung zu entnehmen. Diese Träger sollen offensichtlich nur zum Zusammenhalt der LWL bis zu deren Einbringung in die Bohrung des Profilkörpers dienen.

Der Erfindung liegt die Aufgabe zugrunde, das eingangs geschilderte LWL-Kabel so weiterzubilden, daß bei möglichst kleinen Abmessungen eine große Anzahl von LWL wirksam geschützt darin angeordnet werden kann.

Diese Aufgabe wird gemäß der Erfindung dadurch gelöst,
- daß die Bandleitung mit langem Schlag um einen in Längsrichtung des Kabels verlaufenden Kern herumgewickelt ist und
- daß die LWL zwischen den beiden einseitig mit einer klebfähigen Schicht versehen, aus glasfaserverstärktem Kunststoff bestehenden bandförmigen Trägern einkaschiert sind, deren thermischer Ausdehnungskoeffizient demjenigen der LWL entspricht und die sowohl mit den LWL als auch miteinander verklebt sind.

Mit diesem LWL-Kabel ist der Vorteil von Bandleitungen optimal ausgenutzt. In der Bandleitung ist eine Anzahl von LWL nebeneinander angeordnet, die dadurch gegebenenfalls sehr einfach gleichzeitig durchverbunden oder an Geräte angeschlossen werden können. Das gilt insbesondere dann, wenn die LWL in einem vorgegebenen Raster nebeneinander liegen.

Durch das Einkaschieren zwischen den beiden bandförmigen Trägern - im folgenden kurz Bänder genannt - aus glasfaserverstärktem Kunststoff sind die LWL über ihre ganze Länge unverrückbar festgelegt und außerdem gut gegen Feuchtigkeit und Beschädigungen durch Biegen oder Knicken geschützt. Der Verbund aus den beiden Bändern mit den zwischen denselben liegenden LWL gibt der Bandleitung die dazu erforderliche mechanische Stabilität. Diese Stabilität bleibt bei allen Bedingungen erhalten, denen ein LWL-Kabel ausgesetzt wird. Das gilt insbesondere auch für temperaturbedingte Einflüsse, die sich nicht negativ auswirken können, weil für die Bänder ein Material verwendet ist, dessen thermischer Ausdehnungskoeffizient demjenigen der LWL entspricht. Es kann also keine temperaturbedingten Relativbewegungen zwischen den LWL und den Bändern geben.

Ein Ausführungsbeispiel des Erfindungsgegenstandes ist in den Zeichnungen dargestellt.

Es zeigen:

Fig. 1 einen Querschnitt durch eine Bandleitung für ein LWL-Kabel nach der Erfindung.

Fig. 2 ein LWL-Kabel mit absatzweise entfernten Schichten.

Fig. 3 schematisch eine Vorrichtung zur Herstellung des LWL-Kabels.

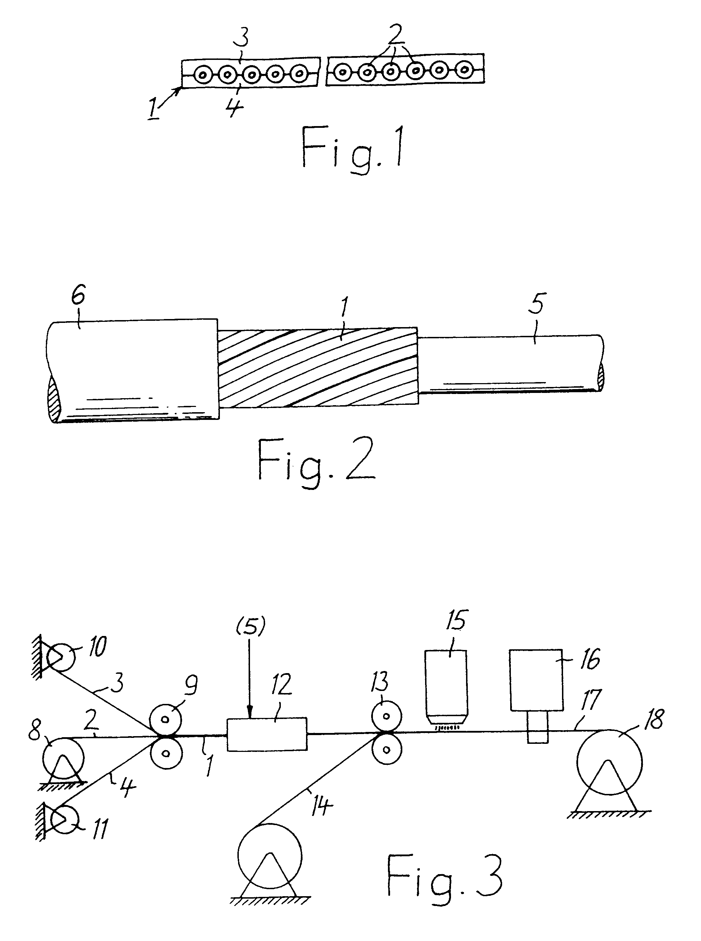

In der in Fig. 1 dargestellten Bandleitung 1 ist eine Anzahl von LWL 2 zwischen zwei Bändern 3 und 4 einkaschiert, die aus glasfaserverstärktem Kunststoff bestehen und einseitig mit einer klebfähigen Schicht versehen sind. Die klebfähigen Schichten der Bänder 3 und 4 sind bei der Herstellung der Bandleitung 1 einander zugekehrt, so daß sie beim Kaschierverfahren mit den LWL 2 und in den Zwischenräumen zwischen denselben sowie an den Rändern miteinander verkleben.

Wie schon erwähnt, ist in der Bandleitung 1 eine Anzahl von LWL 2 enthalten, die mit entsprechenden Verbindungselementen bzw. Spleißgeräten alle gleichzeitig durchverbunden oder angeschlossen werden können. Das gilt insbesondere dann, wenn die LWL 2 über die ganze Breite der Bandleitung 1 in einem vorgegebenen Raster nebeneinander liegen. In einer Bandleitung 1 können beispielsweise 10 bis 60 LWL 2 nebeneinander angeordnet werden.

Die Bänder 3 und 4 bestehen mit dem glasfaserverstärkten Kunststoff aus einem Material, dessen Temperaturkoeffizient demjenigen der LWL 2 entspricht. Es ist dadurch erreicht, daß Temperaturschwankungen sich auf die Bandleitung 1 nicht auswirken können.

Die Bandleitung 1 mit den LWL 2 ist gemäß Fig. 2 mit langem Schlag um einen Kern 5 herumgewickelt. Die einzelnen Windungen der Bandleitung 1 können einander überlappen. Der Kern 5 kann aus beliebigem Material bestehen, in dem prinzipiell auch zugfeste Elemente angeordnet sein können. Es ist auch möglich, im Kern 5 übliche Kupferadern anzubringen, die zur Kommunikation mit herkömmlichen Geräten verwendet werden können, wenn ein LWL-Kabel verlegt wird.

Über der aus Bandleitung 1 und Kern 5 bestehenden Seele des LWL-Kabels ist ein zugfester Mantel 6 angeordnet, der mit aus der Kabeltechnik bekannten Verfahren aufgebracht werden kann. Der Mantel 6 kann beispielsweise ein geschlossenes Metallrohr sein, das aus einem längseinlaufenden Band geformt und mit einer Längsnaht verschweißt wird. Ein solches Band kann beispielsweise aus Stahl bestehen. Es ist auch möglich, ein solches Rohr quer zu seiner Längsrichtung zu wellen, um demselben eine größere Biegbarkeit zu geben. Der zugfeste Mantel 6 kann aber auch aus einem dünneren, folienartigen Metallband bestehen, das durch zugfeste Fäden stabilisiert ist. Solche Fäden können beispielsweise aus Stahl oder aus Polyaramid bestehen. Grundsätzlich ist der Aufbau des zugfesten Mantels 6 beliebig. Es muß nur sichergestellt sein, daß er wesentliche Zugkräfte aufnehmen kann, wie sie beispielsweise bei der Verlegung des LWL-Kabels auftreten können. Gegebenenfalls kann über dem zugfesten Mantel noch eine Kunststoffschicht aufgebracht werden.

Bei der Herstellung eines LWL-Kabels, in dem mindestens eine Bandleitung 1 nach Fig. 1 enthalten ist, wird beispielsweise wie folgt vorgegangen: Von einer der gewünschten Anzahl der LWL 2 entsprechenden Anzahl von Spulen 8 werden LWL 2 abgezogen und zu einem Walzenpaar 9 geführt. In das Walzenpaar 9 werden weiterhin aus glasfaserverstärktem Kunststoff bestehende Bänder 3 und 4 hineingeführt, die einseitig mit einer klebfähigen Schicht versehen sind. Sie werden von Spulen 10 und 11 abgezogen. Die beiden Bänder 3 und 4 werden dabei von unterschiedlichen Seiten an die LWL 2 herangeführt. Durch das Walzenpaar 9 werden die LWL 2 zwischen den beiden Bändern 3 und 4 einkaschiert, so daß aus dem Walzenpaar 9 die fertige Bandleitung 1 austritt.

In einer nachfolgenden Formungseinrichtung 12 wird die Bandleitung 1 um den Kern 5 herumgewickelt. Um die dadurch gebildete Seele des LWL-Kabels wird in einer Formungsstufe 13 ein Metallband 14 herumgeformt, das von einer Spule abgezogen wird. Es ergibt sich daraus der zugfeste Mantel 6 entsprechend den obigen Ausführungen. Der Mantel 6 kann in einer Station 15 mit einer Längsnaht verschweißt werden. Die Station 15 kann jedoch auch dazu dienen, ein dünneres, durch zugfeste Fäden stabilisiertes Metallband an einer in Längsrichtung verlaufenden Überlappungsstelle zu verkleben. Auf den Mantel 6 kann im gleichen Arbeitsgang mittels eines Extruders 16 eine Kunststoffschicht aufgebracht werden. Das fertige LWL-Kabel 17 kann dann auf eine Spule 18 aufgewickelt werden.

Das LWL-Kabel 17 kann entsprechend den vorangehenden Ausführungen also einschließlich der Herstellung der Bandleitung 1 in einem einzigen Arbeitsgang hergestellt werden. Grundsätzlich ist es auch möglich, die Bandleitung 1 vorzufertigen und erst später in ein LWL-Kabel einzubringen. Insbesondere bei der letztgenannten Verfahrensweise ist es auch möglich, zwei oder mehr Bandleitungen 1 in einem LWL-Kabel unterzubringen.

Die LWL 2 sind durch das Einkaschieren in der Bandleitung 1 nicht nur mechanisch, sondern auch gegen Feuchtigkeit geschützt. Das LWL-Kabel 17 kann insgesamt ebenfalls feuchtigkeitsgeschützt und insbesondere längswasserdicht ausgeführt werden, wenn alle Hohlräume innerhalb des Mantels 6 mit Dichtungsmaterial ausgefüllt werden. Ein solches Material kann beispielsweise das in der Kabeltechnik übliche Petrojelly auf Vaselinebasis sein. Grundsätzlich kann jedoch auch schäumbares Material verwendet werden.

**Patentansprüche**

1. Nachrichtenkabel mit Glasfasern aufweisenden Lichtwellenleitern und zugfestem Mantel, in dessen von dem Mantel umgebenen immenbereich mindestens eine Bandleitung angeordnet ist, in der die Lichtwellenleiter parallel zueinander verlaufend zwischen zwei bandförmigen Trägern festgelegt sind, dadurch gekennzeichnet,
   - daß die Bandleitung (1) mit langem Schlag um einen in Längsrichtung des Kabels verlaufenden Kern (5) herumgewickelt ist und
   - daß die Lichtwellenleiter (2) zwischen den beiden, einseitig mit einer klebfähigen Schicht versehenen, aus glasfaserverstärktem Kunststoff bestehenden bandförmigen Trägern (3, 4) einkaschiert sind, deren thermischer Ausdehnungskoeffizient demjenigen der Lichtwellenleiter (2) entspricht, und die sowohl mit den Lichtwellenleitern (2) als auch miteinander verklebt sind.

**Claims**

1. Communication cable comprising optical waveguides, which have glass fibres, and a cladding strong in tension, in the inner region of which surrounded by the cladding at least one ribbon conductor is arranged in which the optical waveguides are fixed extending parallel to one another between two strip-shaped supports, characterised in that
   - the ribbon conductor (1) is wound with a long lay around a core (5) extending in the longitudinal direction of the cable, and
   - the optical waveguides (2) are jacketed between the two strip-shaped supports (3, 4) which are provided on one side with an adhesive layer, and consist of glass-fibre reinforced plastic, and whose coefficient of thermal expansion corresponds to that of the optical waveguides (2) and which are bonded both to the optical waveguides (2) and to one another.

**Revendications**

1. Câble de communication comportant des guides d'ondes lumineuses et une gaine résistante à la traction, et dans l'âme duquel, entourée par la gaine, est disposée au moins une bande de guides d'ondes, dans laquelle les guides d'ondes lumineuses sont fixés, en s'étendant parallèlement les uns aux autres, entre deux supports en forme de bandes, câble caractérisé en ce que la bande de guides d'ondes (1) est enroulée en faisant un long tour autour d'un noyau (5) s'étendant en direction longitudinale du câble et en ce que les guides d'ondes lumineuses (2) sont fixés par stratification entre les deux bandes (3,4) pourvues sur une face d'une couche à pouvoir collant et constituées en matière synthétique renforcée par des fibres de verre, dont le coefficient de dilatation thermique correspond à celui des guides d'ondes lumineuses (2) et qui sont collées aussi bien avec les guides d'ondes lumineuses (2) que l'une avec l'autre.

Fig.1

Fig.2

Fig.3